# EUROPEAN PATENT SPECIFICATION

(11) **EP 1 536 660 B1**
(45) Date of publication and mention of the grant of the patent: **23.10.2013**
(21) Application number: 04104184.9
(22) Date of filing: 01.09.2004
(51) Int. Cl.: H04W 76/04

(54) **Communication system, communication units, and method of ambience listening thereto**
Kommunikationssystem, Kommunikationseinheiten und Verfahren zum Umgebungsmithören
Système de communication, unités de communication et procédé d'attente d'entourage

(30) Priority: 27.11.2003 GB 0327507
(43) Date of publication of application: 01.06.2005
(73) Proprietor: Motorola Solutions, Inc., Schaumburg IL 60196 (US)
(72) Inventor: Vered, Aryeh, 67899 Tel Aviv (IL); Or-Shraga, Boaz, 67899 Tel Aviv (IL); Cherniak, Michael, 67899 Tel Aviv (IL)
(74) Representative: Treleven, Colin

(56) References cited:
- US-A- 5 589 818
- US-B1- 6 504 926
- "ETSI EN 300 392-10-21 V1.2.1 (2003-09) Terrestrial Trunked Radio (TETRA); Voice plus Data (V+D); Part 10: Supplementary services stage 1; Sub-part 21: Ambience Listening (AL)"[Online] September 2003 (2003-09), XP002468889 Sophia Antipolis - France Retrieved from the Internet: URL:http://webapp.etsi.org/exchangefolder/ en_3003921021v010201p.pdf> [retrieved on 2008-02-12]
- "Motorola MTM700 product brochure"[Online] August 2003 (2003-08), XP002468890 Retrieved from the Internet: URL:http://developer.motorola.com/docstool s/productbrochures/mtm700_Brochure.pdf/> [retrieved on 2008-02-13]

## Description

### Field of the Invention

This invention relates to ambience listening in a wireless communication system which includes at at least one subscriber communication unit and a monitoring communication unit.

### Background of the Invention

In the field of this invention, it is known that the ambience listening feature is one of the voice supplementary services supported in radio communication systems such as the TETRA (Terrestrial Trunked Radio) communication system, as defined in the industry standards of the European Telecommunications Standards Institute (ETSI). Ambience listening allows an authorized user to establish a call with a specific subscriber communication unit for the purpose of monitoring voice activity in the vicinity of that subscriber, without obviously initiating any indication to the user of the subscriber communication unit that he/she is being remotely monitored.

Thus, ambience listening is often considered to be a means of increasing the subscriber unit user's safety.
In situations where the dispatcher has received an alarm, or has a suspicion that the user is, say, in a life-threatening situation, the dispatcher can invoke Ambience listening to help determine what is happening to the user. Ambience listening is normally activated or ceased by the dispatcher sending an ambience listening command to the subscriber communication unit in question.

The ability of a monitoring communication unit to successfully perform such remote (ambience) listening is known to be affected by the following parameters:
(i) Microphone sensitivity of the subscriber communication unit. This is dependent upon the operation of any equalizer, which, in turn, is dependent upon the background conditions at the user, e.g. noise, conversations, etc.
(ii) Any activated algorithms within the subscriber communication unit, such as transmit automatic gain control (AGC), noise-suppression, double-talk detection, voice alternators, etc.
(iii) Different operational modes within the subscriber communication unit, such as discontinuous transmission (DTX) being employed as part of a current saving initiative.

In particular, microphone sensitivity is known to be a critical determining factor in an ambience listening process. When the microphone sensitivity is too *high,* a normal speech level may cause the microphone/audio circuit to saturate, thereby causing voice distortion.
In addition, high microphone sensitivity increases the level of the environmental noise entering the microphone/audio circuit. Thus, these two factors reduce the intelligibility of the remotely monitored communication. In contrast, when the microphone sensitivity is too *low,* the microphone circuit may not be capable of providing sufficient gain to the voice signal that is input to the microphone. Hence, the monitoring user will find it difficult to understand communication at the remote subscriber.

US-A-5,589,818 describes a 'personal response system', for use in a home or a plant facility. The personal response system comprises a help console, linked to personnel working in a response center. When a user of the help console is too far from the console, the microphone sensitivity and speaker volume of the help console can be increased remotely by the response center. This may aid persons who are incapacitated, and unable to approach the help console.

### Statement of Invention

In accordance with a first aspect of the present invention, there is provided a wireless communication system as defined in claim 1 of the accompanying claims.

The dispatch station is able to adjust audio attributes of the noise affected mobile radio communication unit, to improve speech intelligibility during an ambience listening call.

In accordance with a second aspect of the present invention, there is provided a method as defined in claim 9 of the accompanying claims.

In accordance with a third aspect of the present invention, there is provided a dispatch station in accordance with claim 11 of the accompanying claims.

In accordance with a fourth aspect of the present invention, there is provided a mobile radio communication unit in accordance with claim 13 of the accompanying claims.

Preferably, the audio quality parameters that are modified comprise microphone sensitivity circuits/elements and/or activating one or more audio algorithms in the mobile radio communication unit.

Further, the dispatch station is preferably configured to interrogate the mobile radio communication unit, in order to determine one or more values of call audio quality parameters that is/are employed by the mobile radio communication unit. In this manner, the dispatch station is able to determine audio quality parameters associated with the affected mobile radio communication unit, when it determines that an ambience listening call is suffering from poor audio quality, and thereafter recommend appropriate changes.

In addition, the preferred embodiment of the present invention provides a variety of protocol data messages to facilitate ambience listening of a call of a remote mobile radio communication unit.

Further features of the present invention are as claimed in the dependent Claims.

The present invention beneficially provides a method, and products operated by the method, by which audio quality factors affecting ambience listening of a mobile radio communication unit, e.g. a portable or mobile radio, may be remotely controlled or adjusted by a dispatch station, e.g. a fixed or mobile terminal operated by a system controller, using wireless communication between the two units.

### Brief Description of the Drawings

Exemplary embodiments of the present invention will now be described, with reference to the accompanying drawings, in which:
FIG. 1 illustrates a block diagram representation of a wireless communication unit adapted to modify one or more call audio quality parameters in accordance with a preferred embodiment of the present invention;
FIG. 2 illustrates a user interface for a monitoring user according to a preferred embodiment of the present invention;
FIG. 3 illustrates a message sequence flowchart of an example of a monitoring user successfully changing audio parameters of a subscriber user on-line, in accordance with a preferred embodiment of the present invention;
FIG. 4 illustrates a message sequence flowchart of how a monitoring user fails to change audio parameters for an existing Ambience Listening call, in accordance with a preferred embodiment of the present invention;
FIG. 5 illustrates a message sequence flowchart of an audio quality parameter interrogation process in accordance with a preferred embodiment of the present invention; and
FIG. 6 illustrates a flowchart of an algorithm of how a monitoring user may control audio quality of an ambience listening call, in accordance with a preferred embodiment of the present invention.

### Description of Preferred Embodiments

In considering how best to implement an ambience listening mechanism in, say, a TETRA communication system, the inventors of the present invention have appreciated the problems associated with employing a pre-defined audio quality setting of a parameter or circuit component, such as a microphone sensitivity setting. A pre-defined microphone sensitivity setting is likely to be ineffective in practice, due to an unknown and variable distance between the subscriber communication unit and the receiving/monitoring communication unit (i.e. communication from a subscriber user at the extremity of the receiving communication unit's receiver sensitivity will exhibit poor quality audio). Furthermore, employing a pre-defined microphone sensitivity setting is likely to be ineffective due to the indeterminate and variable affect on the communication from other voices and/or noise in the subscriber unit's vicinity.

The preferred embodiment of the present invention therefore proposes a mechanism to remotely control one or more audio quality parameters, such as microphone sensitivity, in a wireless communication unit. The inventive concepts are described below in the context of a remote microphone sensitivity algorithm, which sets microphone sensitivity based upon the background conditions around the affected and monitored user. For example, if the user is at a noisy location, a noise-suppressor algorithm may be activated and arranged to utilise as much of the noise suppression range as possible.

In particular, to overcome the difficulty of setting the microphone senstivity, as well as activating relevant algorithms and/or features, it is proposed to allow a monitoring user to modify the microphone gain and/or enable/disable such microphone senstivity algorithms, circuits and/or features at the subscriber communication unit according to the dynamic background conditions in the vicinity of the subscriber communication unit at that time. In such a manner, a monitoring user will be able to adjust the microphone sensitivity of a remote subscriber communication unit during an ambience listening call.

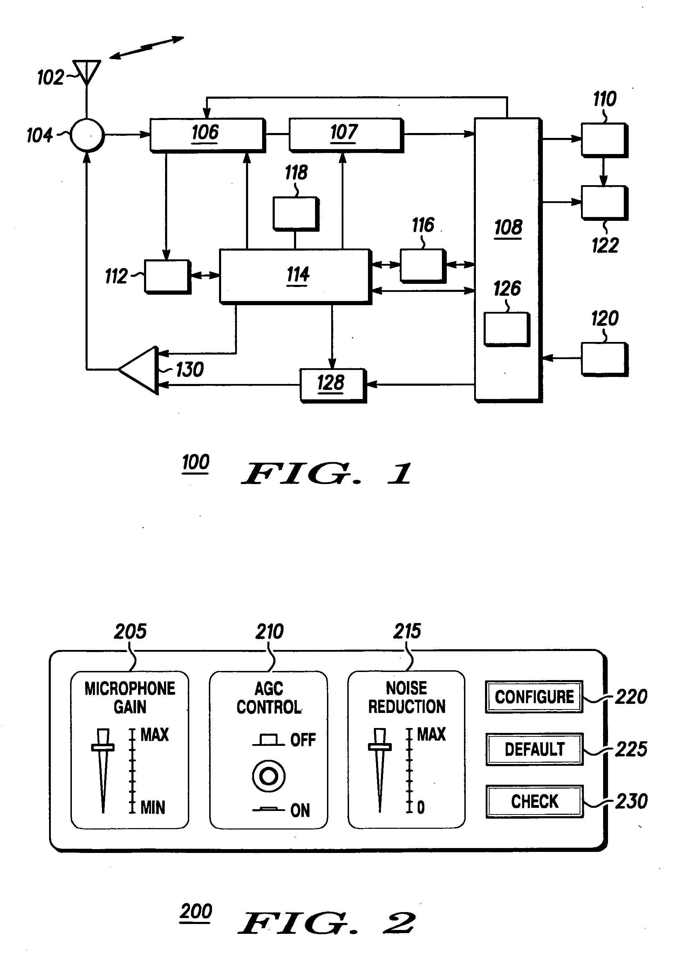

Referring now to FIG. 1, a block diagram of a wireless subscriber unit/mobile station (MS) 100, adapted to support the inventive concepts of the preferred embodiments of the present invention, is shown. The MS 100 contains an antenna 102 preferably coupled to a duplex filter or antenna switch 104 that provides isolation between receive and transmit chains within MS 100. The receiver chain includes receiver front-end circuitry 106 (effectively providing reception, filtering and intermediate or base-band frequency conversion). The front-end circuit 106 is serially coupled to a signal processing function (generally realised by a digital signal processor (DSP)) 108 via a baseband (back-end) processing circuit 107. A controller 114 is operably coupled to the front-end circuitry 106 and a received signal strength indication (RSSI) function 112; so that the receiver can calculate receive bit-error-rate (BER) or frame-error-rate (FER) or similar link-quality measurement data from recovered information via the RSSI function 112.

A memory device 116 is operably coupled to the signal processing function 108 and controller 114 and stores a wide array of MS-specific data, for example decoding/encoding information and voltages to be applied to components in the audio circuit to produce a specific audio performance. A timer 118 is operably coupled to the controller 114 to control the timing of operations, namely the transmission or reception of time-dependent signals such as speech frames, within the MS 100. As known in the art, received signals that are processed by the signal processing function 108 are typically applied to an output device 110 of a user interface 122, such as a speaker or display.

The transmit chain comprises an input device 120 of the user interface 122, such as a microphone or keypad, operably coupled to the processor 108. An output from the signal processing function 108 is input to the transmitter/modulation circuitry 128 and thereon to a power amplifier 130. The signal processing function 108, transmitter/modulation circuitry 128 and the power amplifier 130 are operationally responsive to the controller 114, with an output from the power amplifier coupled to the duplex filter or antenna switch 104, as known in the art.

In accordance with the preferred embodiment of the present invention, a look-up table within the memory device 116 is preferably constructed to store audio quality parameter information of the MS 100. In addition, the signal processing function 108 has been adapted to comprise microphone/audio sensitivity algorithms and/or features 126, which are configured to implement the inventive concepts herein described. In a similar manner, a monitoring user's communication unit, such as a dispatch console, comprises a memory device operably coupled to a processor and a transceiver, with the memory device storing audio quality information of one or more noise-affected remote subscriber communication units.

In this regard, it is proposed that new ambience listening messages, in the form of protocol data units (PDUs), are incorporated into the TETRA standard for the purpose of controlling the ambience listening call audio quality (CAQ). Thus, the signal processor 108 is configured to send or receive any of the following PDU message types, preferably in the context of an ambience listening call:
(i) CAQ REQUEST PDU: issued by the monitoring user to the subscriber communication unit for (re-) configuring an audio performance of the ambience listening call. It is proposed that the monitoring user will also preferably be able to demand an immediate response to any CAQ PDU request;
(ii) CAQ RESPONSE PDU: issued by the subscriber communication unit to the monitoring user as a response to the CAQ REQUEST PDU; this response will indicate whether the (re-)configuration of the remote subscriber unit was successful or failed;
(iii) CAQ INTERROGATION PDU issued by the monitoring user to the subscriber communication unit to enquire about the current ability of the subscriber communication unit to control/modify audio parameters to affect its audio quality; and
(iv) CAQ INDICATION PDU issued by the subscriber communication unit to the monitoring user as a response to the CAQ interrogation PDU.

The audio quality of the subscriber communication unit is remotely controlled by management of a set of audio quality parameters, for example one or more of the following:
(i) Microphone gain (current or requested);
(ii) Selection of a range of a microphone gain (if a number of ranges are available);
(iii) The AGC status, i.e. On/Off/Disabled;
(iv) Noise suppression (NS) status, i.e. On/Off/Disabled;
(v) Noise reduction (NR) level; and
(vi) A maximum level for noise reduction.

The new CAQ messages preferably include one or more of the above parameters as they are described in Table 1 below:

**Table 1:**

| **PDU name** | **Dir'n*** | **Parameters** | **Values** |
|---|---|---|---|
| CAQ REQUEST | MA | Mic Gain | Any value in dB |
| | | AGC | On/Off |
| | | NR | Any value in dB |
| | | Response | Immediate/Not Immediate |
| CAQ RESPONSE | AM | Report | Accept/Reject |
| | | Mic Gain | Current mic gain value in dB |
| | | Range of Mic Gains | Min and max mic gains in dB |
| | | AGC | On/Off/Disabled |
| | | NS Status | On/Off/Disabled |
| | | NR ** | Current NR in dB |
| | | Max NR ** | Max NR in dB |
| CAQ INTERROGATION | MA | Response | Immediate/Not Immediate |
| CAQ INDICATION | AM | Mic Gain | Current mic gain value in dB |
| | | Range of Mic Gains | Min and max mic gains in dB |
| | | AGC | On/Off/Disabled |
| | | NS Status | On/Off/Disabled |
| | | NR ** | Current NR in dB |
| | | Max NR ** | Max NR in dB |

| | | | |
|---|---|---|---|
| *: MA direction - from monitoring user to subscriber communication unit; AM direction - from subscriber communication unit to monitoring user. **: Presented if NS Status is "On" | | | |

It is within the contemplation of the present invention that the signal processing function 108 and controller 114 arrangement may be combined into one element, operably connected or separate functions interconnected in a reasonable manner as known in the art.

Of course, the various components within the MS 100 can be realised in discrete or integrated component form. Furthermore, it is within the contemplation of the invention that the MS 100 may be any radio transmitter and/or receiver device, such as a portable or mobile PMR radio, a mobile phone, a personal data assistant (PDA), a wireless-capable laptop computer.

Referring now to FIG. 2, a user interface 200 for a monitoring user is illustrated according to a preferred embodiment of the present invention. The user interface 200 comprises a visual display of a microphone gain setting 205, an indication of whether an AGC circuit is switched on/off 210 and a visual display of a noise reduction setting 215. In addition, user input controls are provided for configuring microphone sensitivity algorithms and/or features 220, applying a default set of parameters 225 or performing a check of the parameters that are currently being used 230.

Thus, by provision of such audio quality information to a monitoring user, the monitoring user is able to interpret the reasons for the poor quality of the ambience listening call and effect appropriate changes to the affected user's communication unit. In this regard, it is envisaged that the user interface 200 is operably coupled to a transceiver to transmit and receive appropriate microphone sensitivity commands or information.

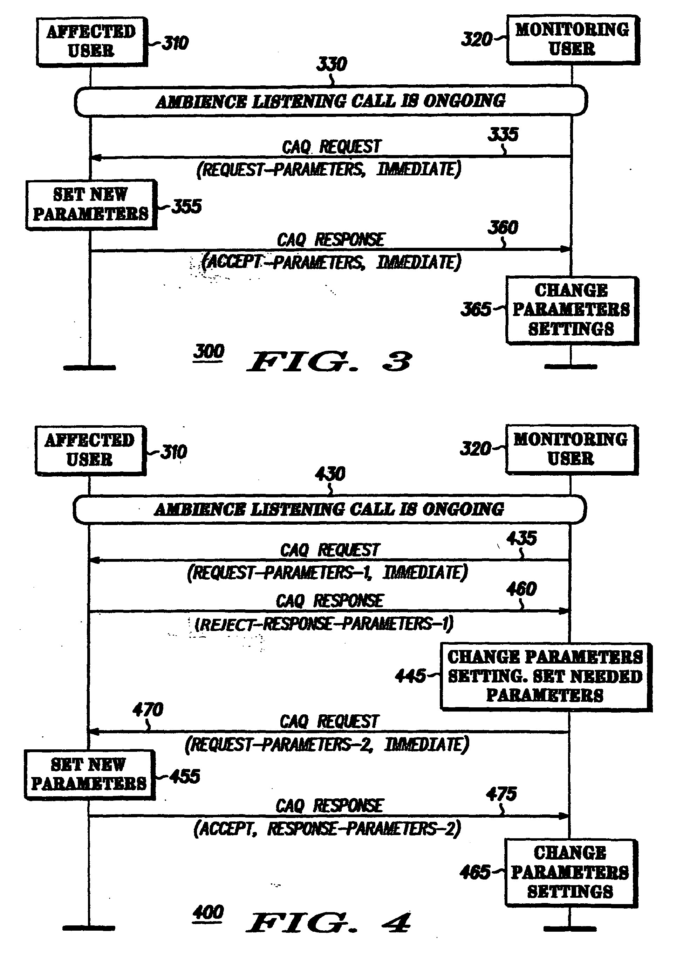

Referring now to FIG. 3, a signal flow diagram 300 illustrates an example of a monitoring user 320 successfully changing audio quality of a remote subscriber user 310 in a call. The scenario shows how the monitoring user 320 is able to change audio parameters for an existing ambience listening call.

After an ambience listening call has been established 330, the monitoring user 320 is provided with the ability to adjust audio quality parameters on the remote subscriber communication unit 310 whilst participating in a call. In order to achieve this control, the monitoring user 320 initiates the sending of a CAQ REQUEST protocol data unit (PDU) 335 to the subscriber communication unit 310. The CAQ REQUEST PDU 335 proposes desirable values of the audio parameters, as determined by the monitoring user 320. As the audio control method is used during a voice call, the radio unit 310 has an opportunity to respond to a CAQ REQUEST PDU and/or a CAQ INTERROGATION PDU in a special free-from-traffic frame (say, in TETRA - every 18^{th} frame in a 1-second long multiframe). If an "immediate" response is requested, the radio unit will "steal" traffic slots in order to send a CAQ response/indication PDU.

In turn, the subscriber communication unit 310, upon reception of the CAQ REQUEST PDU 335, will assess the proposed audio parameters contained within the CAQ REQUEST PDU 335. If the proposed audio parameters are acceptable, the subscriber communication unit 310 will try to re-configure the audio parameters in its radio with these new parameters 355. As shown, the values of the received parameters in this case were acceptable and the subscriber communication unit 310 preferably responds to the monitoring user 320 with a CAQ RESPONSE PDU 360 indicating a successful adjustment of the audio parameters on the affected radio. The monitoring user then updates the audio parameter settings 365 that it has recorded for the subscriber communication unit 310.

In an enhanced embodiment of the present invention, and referring now to FIG. 4, a message sequence flowhart illustrates how a monitoring user 320 fails to change audio parameters for the existing ambience listening call when trying to configure an audio quality for the remote subscriber communication unit 310, say, by using incorrect or unacceptable parameters. Again, in this scenario, after an ambience listening call has been established 430, the monitoring user 320 is provided with the ability to adjust audio quality parameters of the remote subscriber communication unit 310. In order to achieve this control, the monitoring user 320 initiates the sending of a CAQ REQUEST protocol data unit (PDU) in step 435 to the remote subscriber communication unit 310.

The CAQ REQUEST PDU in step 435 proposes desirable values of the audio parameters, as determined by the monitoring user 320. Again, as the audio control method is used during a voice call, the radio unit 310 has an opportunity to respond to a CAQ REQUEST PDU and/or a CAQ INTERROGATION PDU in a special free-from-traffic frame. If an "immediate" response is requested, the radio unit will preferably "steal" traffic slots in order to send a CAQ response/indication PDU.

In turn, the remote subscriber communication unit 310, upon reception of the CAQ REQUEST PDU, will assess the proposed audio parameters contained within the CAQ REQUEST PDU in step 435. If, in this scenario, some of the parameters were available or acceptable and some were unavailable or unacceptable, the subscriber communication unit 310 will preferably send a CAQ RESPONSE PDU 460 to the monitoring user 320. The CAQ RESPONSE PDU 460 preferably indicates a failure of the subscriber communication unit 310 to react to the CAQ REQUEST PDU 435. The CAQ RESPONSE PDU 460 also preferably provides details of both the current audio setting (e.g. microphone gain, NS and AGC status) of the noise-affected remote subscriber communication unit 310, as well as, for example, the available ranges of microphone gains and/or level of maximum noise reduction.

In response, the monitoring user 320 changes the parameters in step 445 and uses the correct parameters in a subsequent (second) CAQ request 470 sent to the remote subscriber communication unit 320, in a second attempt to (re-)configure the audio quality. This time, the values of the received parameters were acceptable to the subscriber communication unit 310. The remote subscriber communication unit 310 sets the audio quality of its radio with these new audio quality parameters in step 455. The remote subscriber communication unit 310 then preferably responds to the monitoring user 320 with a CAQ RESPONSE PDU 475 indicating a successful adjustment of the audio parameters of the affected radio. The monitoring user then updates the audio parameter settings 465 that it has recorded for the remote subscriber communication unit 310. In this regard, an audio quality negotiation process enables the monitoring user 320 to change the audio parameters and/or circuits/components employed by the remote subscriber communication unit 310.

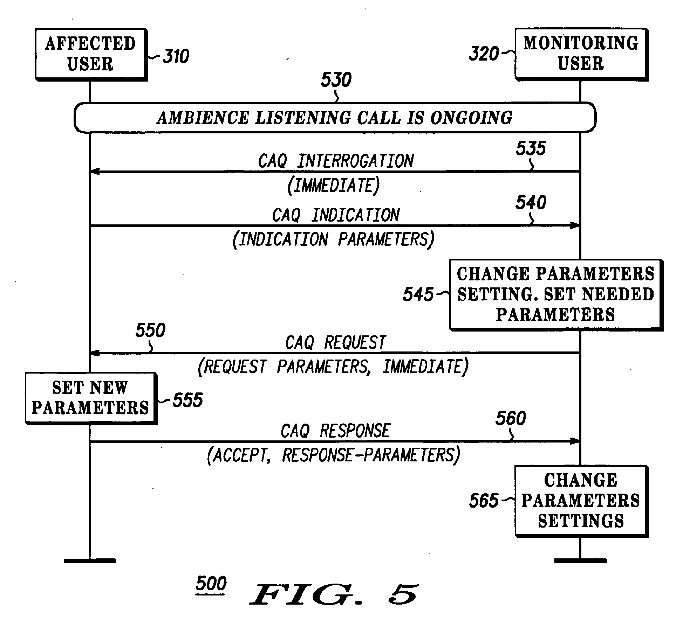

In a yet further enhancement to the preferred embodiment of the present invention, an audio quality parameter interrogation process is illustrated in the message sequence flowchart of FIG. 5. The interrogation process is performed prior to audio (re-) configuration. This scenario shows how a monitoring user uses an interrogation message in order to check the audio characteristics of the remote subscriber communication unit prior to (re-)configuring it.

Again in this scenario after an ambience listening call has been established 530, the monitoring user 320 sends a CAQ INTERROGATION PDU 535 to the remote subscriber communication unit 310 to obtain knowledge about the available audio parameters at the remote subscriber communication unit 310. In response to the CAQ INTERROGATION PDU 535, the remote subscriber communication unit 310 has to respond with a CAQ INDICATION PDU 540 indicating the values of specific or all audio parameters.

In response, the monitoring user 320 modifies the parameters in step 545 and uses the correct parameters in a first CAQ request 550 sent to the remote subscriber communication unit 320, in order to (re-)configure the audio quality. In this case, the values of the received parameters were acceptable to the remote subscriber communication unit 310. The remote subscriber communication unit 310 sets the audio quality of his/her radio with these new audio quality parameters in step 555. The remote subscriber communication unit 310 then preferably responds to the monitoring user 320 with a CAQ RESPONSE PDU 560 indicating a successful adjustment of the audio parameters of the affected radio. The monitoring user then updates the audio parameter settings 565 that it has recorded for the remote subscriber communication unit 310.

Thus, the aforementioned mechanisms enable a monitoring user to obtain a variety of information about the audio capabilities of a subscriber unit user. This information is preferably applied to a software application employed in a processor on the monitoring user side. The software application preferably illustrates values for some or all of the audio parameters, for example, microphone gain, NR, AGC status, etc. indicating the current audio quality values and audio quality ranges. This enables the monitoring user to easily interpret and (re-)configure the audio quality of the remote subscriber communication unit 310.

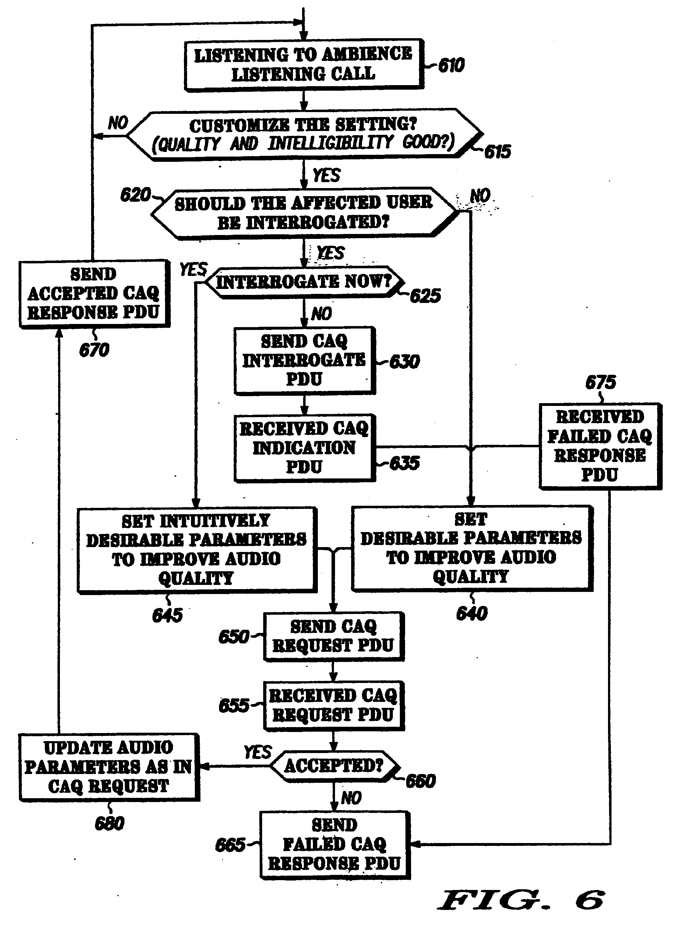

Referring now to FIG. 6, a flowchart 600 summarises the basic algorithm of how a monitoring user may control audio quality of an ambience listening call by using the aforementioned PDUs, in accordance with the preferred embodiment of the present invention. The preferred algorithm commences with a monitoring user performing an ambience listening operation of a noise-affected remote subscriber communication unit, as shown in step 610.

A determination is made by the monitoring user, in step 615, as to whether the audio quality settings of the remote subscriber communication unit are acceptable or need to be changed, for example whether the audio quality is good, how intelligible is the recovered voice, etc.

When the monitoring user determines, in step 615, that the audio quality settings of the remote subscriber communication unit need to be changed, a determination is made as to whether the affected remote subscriber communication unit should be interrogated, as shown in step 620. If it is determined that the affected remote subscriber communication unit should be interrogated, a determination is made as to whether any interrogation should be made immediately or not, in step 625. If an interrogation is to be made immediately (or at least relatively soon), in step 625, a CAQ INTERROGATE PDU is sent by the monitoring user in step 630.

The monitoring communication unit then receives a CAQ INDICATION PDU, as shown in step 635. The CAQ INDICATION PDU comprises an indication of some or all of the audio parameters used by the noise-affected remote subscriber communication unit. The monitoring user then selects desirable audio quality parameters to be sent to the remote subscriber communication unit, in step 640.

If an interrogation is not to be made immediately, in step 625, the monitoring user intuitively sets the desirable audio quality parameters to be used by the remote subscriber communication unit, in step 645. Following the monitoring user determining the desirable audio quality parameters to be used, either intuitively or following an interrogation process, the monitoring user sends a CAQ REQUEST PDU to the remote subscriber communication unit with the desirable audio quality parameters, as shown in step 650.

The remote subscriber communication unit then receives the CAQ REQUEST PDU in step 655 and determines whether to accept the monitoring user's recommended audio quality parameters in step 660. If the remote subscriber communication unit decides not to accept the audio quality recommendations contained within the received CAQ REQUEST PDU in step 660, the remote subscriber communication unit may then send a CAQ RESPONSE PDU, in step 665, to the monitoring user which receives the CAQ response PDU in step 675. The CAQ RESPONSE PDU informs the monitoring user that the audio quality parameters have not been updated according to the monitoring user's recommendations. In this regard, the monitoring user may then select alternative desirable audio quality parameters to be sent to the remote subscriber communication unit, in step 640.

However, if the remote subscriber communication unit accepts the audio quality recommendations from the received CAQ REQUEST PDU in step 660, the remote subscriber communication unit modifies its respective audio parameters, algorithms, circuits and/or component settings accordingly, in step 680.

The remote subscriber communication unit may then send a CAQ RESPONSE PDU to the monitoring user in step 670, informing the monitoring user that the audio quality parameters have been modified according to the recommendations. The process then returns to step 610 with the monitoring user performing an ambience listening operation of a noise-affected remote subscriber communication unit.

It is within the contemplation of the invention that the inventive concepts of the present invention can be used in any scenario where remote controlling of remote audio devices is desired. One preferred example of such an application is in a TErrestrial Trunked RAdio (TETRA) wireless communication system, where a dispatcher is performing ambience listening or wishes to control the audio attributes of a monitored remote subscriber radio unit.

It will be understood that the communication units and methods of remotely controlling audio parameters of a remote subscriber communication unit, as described above, tend to provide at least one or more of the following advantages:
(i) A monitoring user/communication unit can adjust audio attributes of a remote subscriber communication unit, for example, to improve speech intelligibility during an ambience listening call; and
(ii) The inventive concepts are easy to implement on a real-time processor.

Whilst specific, and preferred, implementations of the present invention are described above, it is clear that one skilled in the art could readily apply variations and modifications of such inventive concepts.

Thus, a mechanism for remote controlling audio parameters in a wireless communication unit is described, which alleviates at least some of the abovementioned disadvantages with known mechanisms.

## Claims

1. A wireless communication system (300) supporting ambience listening, the wireless communication system comprising:
a mobile radio communication unit (310) operable to participate in a call in which audio information is transmitted by the mobile radio communication unit; and
a dispatch station (320) operable to perform an ambience listening operation of the mobile radio communication unit (310) when participating in the call;
wherein the dispatch station (320) is configured to, whilst performing the ambience listening operation, send to the mobile radio communication unit (310) a request for information regarding one or more audio quality parameters of the mobile radio communication unit, or for modification of one or more audio quality parameters of the mobile radio communication unit (310); and
the mobile radio communication unit (310) is operable in response to receiving the request to send to the dispatch station (320) a response message giving the requested information or an indication of whether the requested modification can be made.

2. A communication system (300) according to Claim 1 wherein:
the mobile radio communication unit (310) is configured to provide, in the response message to the request for information regarding one or more audio quality parameters of the mobile radio communication unit (310), information giving an indication of audio parameter settings of the mobile radio communication unit (310).

3. A communication system (300) according to Claim 1 or claim 2, wherein:
the request for modification of one or more audio quality parameters of the mobile radio communication unit (310) from the dispatch station (320) comprises an indication of desirable audio quality parameters for the mobile radio communication unit (310) to use; and
the mobile radio communication unit (310) is operable to accept or reject the indicated parameters

4. A communication system according to claim 3 wherein:
the mobile radio communication unit (310) is configured to provide, in the response message to the request for modification of one or more audio quality parameters of the mobile radio communication unit (310), when the requested modification is unacceptable, an indication of available ranges of audio parameters.

5. A communication system according to any one of the preceding claims wherein the audio parameters are selected from parameters (i) to (iv) as follows:
(i) noise suppression status;
(ii) noise reduction level;
(iii) automatic gain control status; and
(iv) one of a number of ranges of microphone gain;
optionally together with (v) microphone gain.

6. A communication system according to any one of the preceding claims, wherein:
the dispatch station (320) is operable to interrogate the mobile radio communication unit (310), to determine one or more call audio quality parameters employed by the calling unit;
the mobile radio communication unit (310) is operable to send a first response giving information indicating the one or more parameters;
the dispatch station (320) is operable to send a request for the mobile radio communication unit (310), to modify at least one of the parameters; and
the mobile radio communication unit (310) is operable to send a second response, indicating whether the requested modification can be made, wherein the mobile radio communication unit (310), is operable to send the first and second responses, whilst participating in the call.

7. A communication system according to any preceding Claim wherein:
the communication system supports a TETRA air-interface.

8. A communication system according to any previous claim, wherein:
the mobile radio communication unit (310) is operable to send the response message(s) during a free-from-traffic time frame or by stealing traffic slots.

9. A method of remotely controlling one or more audio parameters of a mobile radio communication unit (310), the method comprising the steps of:
a dispatch station (320) performing an ambience listening operation of the mobile radio communication unit (310) participating in a call, in which audio information is transmitted by the mobile radio communication unit (310);
the dispatch station (320), whilst performing the ambience listening operation, sending to the mobile radio communication unit (310) a request message for information regarding one or more audio quality parameters of the mobile radio communication unit (310), or for modification of one or more audio quality parameters of the mobile radio communication unit (310);
the mobile radio communication unit (310) receiving the request message; and
the mobile radio communication unit (310) sending to the dispatch station (320) a response message, giving the requested information or an indication of whether the requested modification can be made.

10. A method according to Claim 9, further including the steps of:
the dispatch station (320) determining whether, prior to sending the request message to request modification of the at least one audio quality parameter, the mobile radio communication unit (310) should be interrogated to obtain information regarding the at least one audio quality parameter currently employed by the mobile radio communication unit (310);
the dispatch station (320) sending an interrogation message to the mobile radio communication unit (310), in response to the determination;
the mobile radio communication unit (310) sending in a first response message, in response to the interrogation message, giving an indication of the at least one audio quality parameter employed at the mobile radio communication unit (310);
the dispatch station (320) sending to the mobile radio communication unit (310), in response to receiving the first response message, a modification request message requesting modification of at least one audio quality parameter;
the mobile radio communication unit (310) receiving the modification request message; and
the mobile radio communication unit (310) sending to the monitoring unit (320) a second response message giving an indication of whether the requested modification can be made;
wherein the mobile radio communication unit (310) sends the first and second response messages, whilst participating in the call.

11. A dispatch station (320) operable to perform an ambience listening operation of a mobile radio communication unit (310) participating in a call in which audio information is transmitted by the mobile radio communication unit (310), wherein the dispatch station (320) is configured, whilst performing the ambience listening operation, to:
send to the mobile radio communication unit (310) a request for information regarding one or more audio quality parameters of the mobile radio communication unit, or for modification of one or more audio quality parameters of the mobile radio communication unit (310); and
to receive a response message giving the requested information or an indication of whether the requested modification can be made.

12. A dispatch station (320) according to claim 11, further comprising:
a transceiver;
a processor, operably coupled to the transceiver, operable to perform ambience listening of a mobile radio communication unit (310) participating in a call;
a monitoring function, operably coupled to the processor, for monitoring a call audio quality of the mobile radio communication unit (310) participating in the call, such that the processor requests a modification of one or more call audio quality parameters of the mobile radio communication unit (310) in response to the call audio quality monitoring; and
a display giving an indication of audio quality parameters of the mobile radio communication unit (310).

13. A mobile radio communication unit (310) operable, when participating in a call in which audio information is transmitted by the mobile radio communication unit to be monitored by a dispatch station (320), the dispatch station (320) performing an ambience listening operation of the mobile radio communication unit (310), wherein the mobile radio communication unit (310) is operable:
to receive and respond to a request message from the dispatch station (320) for information regarding one or more audio quality parameters of the mobile radio communication unit (310), or for modification of one or more audio quality parameters of the mobile radio communication unit (310);
wherein the mobile radio communication unit (310) is operable in response to receiving the request message to send to the the dispatch station (320) a response message giving the requested information or an indication of whether the requested modification can be made.

14. A mobile radio communication unit (310) according to claim 13 comprising:
a transceiver; and
a processor, operably coupled to the transceiver, controlling one or more audio quality parameters of the mobile radio communication unit (310);
wherein the processor is configured to modify one or more call audio quality parameters of the mobile radio communication unit (310) in response to:
(i) receiving a request for such modification from a dispatch station (320) performing ambience listening of a call of the subscriber communication unit; and
(ii) determining that the requested modification is acceptable.

15. A mobile radio communication unit (310) according to claims 13 or claim 14, which is operable to send the response message as a wireless message which comprises a data message.

16. A mobile radio communication unit (310) according to any of claims 13-15, operable, in response to the request message for modification of one or more audio quality parameters, to:
set a microphone sensitivity level; and/or
activate one or more audio algorithms in the mobile radio communication unit (310).

## Patentansprüche

1. Drahtloses Kommunikationssystem (300), das ein Umgebungsmithören unterstützt, wobei das Kommunikationssystem umfasst:
eine mobile Funkkommunikationseinheit (310), die betreibbar ist, um an einem Anruf teilzunehmen, in dem Audioinformationen durch die mobile Funkkommunikationseinheit übertragen werden; und
eine Abfertigungsstation (320), die betreibbar ist, um einen Umgebungsmithörenbetrieb der mobilen Funkkommunikationseinheit (310) durchzuführen, wenn sie an dem Anruf teilnimmt;
wobei die Abfertigungsstation (320) konfiguriert ist, um, während sie den Umgebungsmithörenbetrieb durchführt, an die mobile Funkkommunikationseinheit (310) eine Anforderung von Informationen bezüglich eines oder mehrerer Audioqualitätsparameter der mobilen Funkkommunikationseinheit, oder für eine Modifikation eines oder mehrerer Audioqualitätsparameter der mobilen Funkkommunikationseinheit (310), zu senden; und
die mobile Funkkommunikationseinheit (310) betreibbar ist, um in Reaktion auf ein Empfangen der Anforderung an die Abfertigungsstation (320), eine Antwortnachricht zu senden, die die angeforderten Informationen oder eine Anzeige, ob die angeforderte Modifikation vorgenommen werden kann, enthält.

2. Kommunikationssystem (300) gemäß Anspruch 1, wobei:
die mobile Funkkommunikationseinheit (310) konfiguriert ist, um, in der Antwortnachricht auf die Anforderung von Informationen bezüglich eines oder mehrerer Audioqualitätsparameter der mobilen Funkkommunikationseinheit (310), Informationen bereitzustellen, die eine Anzeige von Audioparametereinstellungen der mobilen Funkkommunikationseinheit (310) enthalten.

3. Kommunikationssystem (300) gemäß Anspruch 1 oder Anspruch 2, wobei:
die Anforderung zur Modifikation eines oder mehrerer Audioqualitätsparameter der mobilen Funkkommunikationseinheit (310) von der Abfertigungsstation (320) eine Anzeige von zu verwendenden wünschenswerten Audioqualitätsparametern für die mobile Funkkommunikationseinheit (310) umfasst; und
die mobile Funkkommunikationseinheit (310) betreibbar ist, um die angezeigten Parameter zu akzeptieren oder abzulehnen.

4. Kommunikationssystem gemäß Anspruch 3, wobei:
die mobile Funkkommunikationseinheit (310) konfiguriert ist, um, in der Antwortnachricht auf die Anforderung einer Modifikation eines oder mehrerer Audioqualitätsparameter der mobilen Funkkommunikationseinheit (310), wenn die angeforderte Modifikation inakzeptabel ist, eine Anzeige von zur Verfügung stehenden Bereichen von Audioparametern bereitzustellen.

5. Kommunikationssystem gemäß einem der vorangehenden Ansprüche, wobei die Audioparameter aus den folgenden Parametern (i) bis (iv) ausgewählt werden:
(i) Rauschunterdrückungsstatus;
(ii) Rauschunterdrückungspegel;
(iii) Status einer automatischen Verstärkungsregelung; und
(iv) einem aus einer Zahl von Bereichen einer Mikrofonverstärkung;
optional zusammen mit (v) Mikrofonverstärkung.

6. Kommunikationssystem gemäß einem der vorangehenden Ansprüche, wobei:
die Abfertigungsstation (320) betreibbar ist, um die mobile Funkkommunikationseinheit (310) abzufragen, einen oder mehrere Anrufaudioqualitätsparameter, die durch die rufende Einheit eingesetzt werden, zu bestimmen;
die mobile Funkkommunikationseinheit (310) betreibbar ist, um eine erste Antwort zu senden, die Informationen enthält, die den einen oder die mehreren Parameter enthält;
die Abfertigungsstation (320) betreibbar ist, um eine Anforderung an die mobile Funkkommunikationseinheit (310) zu senden, mindestens einen der Parameter zu modifizieren; und
die mobile Funkkommunikationseinheit (310) betreibbar ist, um eine zweite Antwort zu senden, die anzeigt, ob die angeforderte Modifikation durchgeführt werden kann, wobei die mobile Funkkommunikationseinheit (310) betreibbar ist, um die erste und die zweite Antwort zu senden, während sie an dem Anruf teilnimmt.

7. Kommunikationssystem gemäß einem der vorangehenden Ansprüche, wobei:
das Kommunikationssystem eine TETRA-Luftschnittstelle unterstützt.

8. Kommunikationssystem gemäß einem der vorangehenden Ansprüche, wobei:
die mobile Funkkommunikationseinheit (310) betreibbar ist, um die Antwortnachricht(en) während eines verkehrsfreien Zeitrahmens oder durch Stehlen von Verkehrsschlitzen zu senden.

9. Verfahren eines entfernten Steuerns eines oder mehrerer Audioparameter einer mobilen Funkkommunikationseinheit (310), wobei das Verfahren die folgenden Schritte umfasst:
Durchführen, durch eine Abfertigungsstation (320), eines Umgebungsmithörenbetriebs der mobilen Funkkommunikationseinheit (310), die an dem Anruf teilnimmt, in dem Audioinformationen durch die mobile Funkkommunikationseinheit (310) übertragen werden;
Senden, durch die Abfertigungsstation (320), während sie den Umgebungsmithörenbetrieb durchführt, einer Anforderungsnachricht an die mobile Funkkommunikationseinheit (310) für Informationen bezüglich eines oder mehrerer Audioqualitätsparameter der mobilen Funkkommunikationseinheit (310), oder für eine Modifikation eines oder mehrerer Audioqualitätsparameter der mobilen Funkkommunikationseinheit (310);
Empfangen der Anforderungsnachricht durch die mobile Funkkommunikationseinheit (310); und
Senden, durch die mobile Funkkommunikationseinheit (310), einer Antwortnachricht an die Abfertigungsstation (320), die die angeforderten Informationen oder eine Anzeige, ob die angeforderte Modifikation durchgeführt werden kann, enthält.

10. Verfahren gemäß Anspruch 9, das weiterhin die folgenden Schritte umfasst:
Bestimmen, durch die Abfertigungsstation (320), ob die mobile Funkkommunikationseinheit (310), vor einem Senden der Anforderungsnachricht, um eine Modifikation des mindestens einen Audioqualitätsparameters anzufordern, abgefragt werden soll, um Informationen bezüglich des mindestens einen Audioqualitätsparameters, der aktuell durch die mobile Funkkommunikationseinheit (310) eingesetzt wird, zu erhalten;
Senden, durch die Abfertigungsstation (320), einer Abfragenachricht an die mobile Funkkommunikationseinheit (310), in Reaktion auf die Bestimmung;
Senden, durch die mobile Funkkommunikationseinheit (310), in einer ersten Antwortnachricht, in Reaktion auf die Abfragenachricht, einer Anzeige mindestens eines Audioqualitätsparameters, der bei der mobilen Funkkommunikationseinheit (310) eingesetzt wird;
Senden, durch die Abfertigungsstation (320), an die mobile Funkkommunikationseinheit (310), in Reaktion auf ein Empfangen der ersten Antwortnachricht, einer Modifikationsanforderungsnachricht, die eine Modifikation mindestens eines Audioqualitätsparameters anfordert;
Empfangen der Modifikationsanforderungsnachricht durch die mobile Funkkommunikationseinheit (310); und
Senden, durch die mobile Funkkommunikationseinheit (310), einer zweiten Antwortnachricht in die Überwachungseinheit (320), die eine Anzeige, ob die angeforderte Modifikation durchgeführt werden kann, enthält;
wobei die mobile Funkkommunikationseinheit (310) die erste und die zweite Antwortnachricht sendet, während sie an dem Anruf teilnimmt.

11. Abfertigungsstation (320), die betreibbar ist, um einen Umgebungsmithörenbetrieb einer mobilen Funkkommunikationseinheit (310), die an einem Anruf teilnimmt, in dem Audioinformationen durch die mobile Funkkommunikationseinheit (310) übertragen werden, durchzuführen, wobei die Abfertigungsstation (320), während sie den Umgebungsmithörenbetrieb durchführt, konfiguriert ist, um:
an die mobile Funkkommunikationseinheit (310) eine Anforderung von Informationen bezüglich eines oder mehrerer Audioqualitätsparameter der mobilen Funkkommunikationseinheit, oder einer Modifikation eines oder mehrerer Audioqualitätsparameter der mobilen Funkkommunikationseinheit (310) zu senden; und
eine Antwortnachricht zu empfangen, die die angeforderten Informationen oder eine Anzeige, ob die angeforderte Modifikation durchgeführt werden kann, enthält.

12. Abfertigungsstation (320) gemäß Anspruch 11, die weiterhin umfasst:
einen Transceiver;
einen Prozessor, der betriebsbereit an den Transceiver gekoppelt ist, der betreibbar ist, um eine Mikrofonfreischaltung einer mobilen Funkkommunikationseinheit (310), die an einem Anruf teilnimmt, durchzuführen;
eine Überwachungsfunktion, die betriebsbereit an den Prozessor gekoppelt ist, zum Überwachen einer Anrufaudioqualität der mobilen Funkkommunikationseinheit (310), die an dem Anruf teilnimmt, sodass der Prozessor eine Modifikation eines oder mehrerer Audioqualitätsparameter der mobilen Funkkommunikationseinheit (310) in Reaktion auf die Anrufaudioqualitätsüberwachung anfordert; und
ein Display, das eine Anzeige von Audioqualitätsparametern der mobilen Funkkommunikationseinheit (310) zur Verfügung stellt.

13. Mobile Funkkommunikationseinheit (310), die betreibbar ist, wenn sie an einem Anruf teilnimmt, in dem Audioinformationen durch die mobile Funkkommunikationseinheit übertragen werden, die durch eine Abfertigungsstation (320) überwacht werden sollen, wobei die Abfertigungsstation (320) einen Umgebungsmithörenbetrieb der mobilen Funkkommunikationseinheit (310) durchführt, wobei die mobile Funkkommunikationseinheit (310) betreibbar ist:
um eine Anforderungsnachricht von der Abfertigungsstation (320) für Informationen bezüglich eines oder mehrerer Audioqualitätsparameter der mobilen Funkkommunikationseinheit (310), oder für eine Modifikation eines oder mehrerer Audioqualitätsparameter der mobilen Funkkommunikationseinheit (310) zu empfangen und zu beantworten;
wobei die mobile Funkkommunikationseinheit (310) betreibbar ist, um, in Reaktion auf ein Empfangen der Anforderungsnachricht, eine Antwortnachricht an die Abfertigungsstation (320) zu senden, die die angeforderten Informationen oder eine Anzeige, ob die angeforderte Modifikation durchgeführt werden kann, enthält.

14. Mobile Funkkommunikationseinheit (310) gemäß Anspruch 13, die umfasst:
einen Transceiver; und
einen Prozessor, der betriebsbereit an den Transceiver gekoppelt ist, der einen oder mehrere Audioqualitätsparameter der mobilen Funkkommunikationseinheit (310) steuert;
wobei der Prozessor konfiguriert ist, um einen oder mehrere Anrufaudioqualitätsparameter der mobilen Funkkommunikationseinheit (310) zu modifizieren, in Reaktion auf:
(i) ein Empfangen einer Anforderung für eine solche Modifikation von einer Abfertigungsstation (320), die eine Mikrofonfreischaltung eines Anrufs der Teilnehmerkommunikationseinheit durchführt; und
(ii) ein Bestimmen, dass die angeforderte Modifikation akzeptabel ist.

15. Mobile Funkkommunikationseinheit (310) gemäß Anspruch 13 oder Anspruch 14, die betreibbar ist, um die Antwortnachricht als eine drahtlose Nachricht, die eine Datennachricht umfasst, zu senden.

16. Mobile Funkkommunikationseinheit (310) gemäß einem der Ansprüche 13 - 15, die betreibbar ist, um, in Reaktion auf die Anforderungsnachricht für eine Modifikation eines oder mehrerer Audioqualitätsparameter:
einen Mikrofonempfindlichkeitspegel einzustellen; und/oder
einen oder mehrere Audioalgorithmen in der mobilen Funkkommunikationseinheit (310) zu aktivieren.

## Revendications

1. Système de communication sans fil (300) supportant l'écoute d'ambiance, le système de communication sans fil comprenant :
une unité de communication radio mobile (310) exploitable pour participer à un appel dans lequel des informations audio sont transmises par l'unité de communication radio mobile ; et
une station de répartition (320) exploitable pour effectuer une opération d'écoute d'ambiance de l'unité de communication radio mobile (310) lors de la participation à l'appel ;
dans lequel la station de répartition (320) est configurée pour, tout en effectuant l'opération d'écoute d'ambiance, envoyer à l'unité de communication radio mobile (310) une demande d'informations concernant un ou plusieurs paramètres de qualité audio de l'unité de communication radio mobile, ou de modification d'un ou plusieurs paramètres de qualité audio de l'unité de communication radio mobile (310) ; et
l'unité de communication radio mobile (310) est exploitable, en réponse à la réception de la demande, pour envoyer à la station de répartition (320) un message de réponse donnant les informations demandées ou une indication de si la modification demandée peut être effectuée.

2. Système de communication (300) selon la revendication 1, dans lequel :
l'unité de communication radio mobile (310) est configurée pour fournir, dans le message de réponse à la demande d'informations concernant un ou plusieurs paramètres de qualité audio de l'unité de communication radio mobile (310), des informations donnant une indication de réglages de paramètre audio de l'unité de communication radio mobile (310).

3. Système de communication (300) selon la revendication 1 ou la revendication 2, dans lequel :
la demande de modification d'un ou plusieurs paramètres de qualité audio de l'unité de communication radio mobile (310) en provenance de la station de répartition (320) comprend une indication de paramètres de qualité audio souhaitables pour l'unité de communication radio mobile (310) à utiliser ; et
l'unité de communication radio mobile (310) est exploitable pour accepter ou rejeter les paramètres indiqués.

4. Système de communication selon la revendication 3, dans lequel :
l'unité de communication radio mobile (310) est configurée pour fournir, dans le message de réponse à la demande de modification d'un ou plusieurs paramètres de qualité audio de l'unité de communication radio mobile (310), lorsque la modification demandée est inacceptable, une indication de plages disponibles de paramètres audio.

5. Système de communication selon l'une quelconque des revendications précédentes, dans lequel les paramètres audio sont sélectionnés parmi les paramètres (i) à (iv) comme suit :
(i) statut de suppression de bruit ;
(ii) niveau de réduction de bruit ;
(iii) statut de commande automatique de gain ; et
(iv) une d'un nombre de plages de gain de microphone ;
facultativement conjointement avec (v) gain de microphone.

6. Système de communication selon l'une quelconque des revendications précédentes, dans lequel :
la station de répartition (320) est exploitable pour interroger l'unité de communication radio mobile (310), pour déterminer un ou plusieurs paramètres de qualité audio d'appel employés par l'unité appelante ;
l'unité de communication radio mobile (310) est exploitable pour envoyer une première réponse donnant des informations indiquant les un ou plusieurs paramètres ;
la station de répartition (320) est exploitable pour envoyer une demande pour l'unité de communication radio mobile (310), pour modifier au moins un des paramètres ; et
l'unité de communication radio mobile (310) est exploitable pour envoyer une seconde réponse, indiquant si la modification demandée peut être effectuée, où l'unité de communication radio mobile (310) est exploitable pour envoyer les première et seconde réponses, tout en participant à l'appel.

7. Système de communication selon l'une quelconque des revendications précédentes, dans lequel :
le système de communication supporte une interface radio TETRA.

8. Système de communication selon l'une quelconque des revendications précédentes, dans lequel :
l'unité de communication radio mobile (310) est exploitable pour envoyer le(s) message(s) de réponse pendant une trame de temps libre de tout trafic ou en volant des créneaux de trafic.

9. Procédé de commande à distance d'un ou plusieurs paramètres audio d'une unité de communication radio mobile (310), le procédé comprenant les étapes de :
une station de répartition (320) effectuant une opération d'écoute d'ambiance de l'unité de communication radio mobile (310) participant à un appel, dans lequel des informations audio sont transmises par l'unité de communication radio mobile (310) ;
la station de répartition (320), tout en effectuant l'opération d'écoute d'ambiance, envoyant à l'unité de communication radio mobile (310) un message de demande d'informations concernant un ou plusieurs paramètres de qualité audio de l'unité de communication radio mobile (310), ou de modification d'un ou plusieurs paramètres de qualité audio de l'unité de communication radio mobile (310) ;
l'unité de communication radio mobile (310) recevant le message de demande ; et
l'unité de communication radio mobile (310) envoyant à la station de répartition (320) un message de réponse, donnant les informations demandées ou une indication de si la modification demandée peut être effectuée.

10. Procédé selon la revendication 9, comprenant en outre les étapes de :
la station de répartition (320) déterminant si, avant l'envoi du message de demande pour demander la modification au moins d'un paramètre de qualité audio, l'unité de communication radio mobile (310) devrait être interrogée pour obtenir des informations concernant au moins un paramètre de qualité audio actuellement employé par l'unité de communication radio mobile (310) ;
la station de répartition (320) envoyant un message d'interrogation à l'unité de communication radio mobile (310), en réponse à la détermination ;
l'unité de communication radio mobile (310) envoyant un premier message de réponse, en réponse au message d'interrogation, donnant une indication du au moins un paramètre de qualité audio employé au niveau de l'unité de communication radio mobile (310) ;
la station de répartition (320) envoyant à l'unité de communication radio mobile (310), en réponse à la réception du premier message de réponse, un message de demande de modification demandant la modification d'au moins un paramètre de qualité audio ;
l'unité de communication radio mobile (310) recevant le message de demande de modification ; et
l'unité de communication radio mobile (310) envoyant à l'unité de surveillance (320) un second message de réponse donnant une indication de si la modification demandée peut être effectuée ;
dans lequel l'unité de communication radio mobile (310) envoie les premier et second messages de réponse, tout en participant à l'appel.

11. Station de répartition (320) exploitable pour effectuer une opération d'écoute d'ambiance d'une unité de communication radio mobile (310) participant à un appel dans lequel des informations audio sont transmises par l'unité de communication radio mobile (310), où la station de répartition (320) est configurée, tout en effectuant l'opération d'écoute d'ambiance, pour :
envoyer à l'unité de communication radio mobile (310) une demande d'informations concernant un ou plusieurs paramètres de qualité audio de l'unité de communication radio mobile, ou de modification d'un ou plusieurs paramètres de qualité audio de l'unité de communication radio mobile (310) ; et
recevoir un message de réponse donnant les informations demandées ou une indication de si la modification demandée peut être effectuée.

12. Station de répartition (320) selon la revendication 11, comprenant en outre :
un émetteur-récepteur ;
un processeur, couplé fonctionnellement à l'émetteur-récepteur, exploitable pour effectuer l'écoute d'ambiance d'une unité de communication radio mobile (310) participant à un appel ;
une fonction de surveillance, couplée fonctionnellement au processeur, pour surveiller une qualité audio d'appel de l'unité de communication radio mobile (310) participant à l'appel, de sorte que le processeur demande une modification d'un ou plusieurs paramètres de qualité audio d'appel de l'unité de communication radio mobile (310) en réponse à la surveillance de la qualité audio d'appel ; et
un affichage donnant une indication de paramètres de qualité audio de l'unité de communication radio mobile (310).

13. Unité de communication radio mobile (310) exploitable, lors de la participation à un appel dans lequel des informations audio sont transmises par l'unité de communication radio mobile, pour être surveillée par une station de répartition (320), la station de répartition (320) effectuant une opération d'écoute d'ambiance de l'unité de communication radio mobile (310), où l'unité de communication radio mobile (310) est exploitable :
pour recevoir et répondre à un message de demande en provenance de la station de répartition (320) d'informations concernant un ou plusieurs paramètres de qualité audio de l'unité de communication radio mobile (310), ou de modification d'un ou plusieurs paramètres de qualité audio de l'unité de communication radio mobile (310) ;
où l'unité de communication radio mobile (310) est exploitable, en réponse à la réception du message de demande, pour envoyer à la station de répartition (320) un message de réponse donnant les informations demandées ou une indication de si la modification demandée peut être effectuée.

14. Unité de communication radio mobile (310) selon la revendication 13, comprenant :
un émetteur-récepteur ; et
un processeur, couplé fonctionnellement à l'émetteur-récepteur, commandant un ou plusieurs paramètres de qualité audio de l'unité de communication radio mobile (310) ;
où le processeur est configuré pour modifier un ou plusieurs paramètres de qualité audio d'appel de l'unité de communication radio mobile (310) en réponse à :
(i) la réception d'une demande d'une telle modification en provenance d'une station de répartition (320) effectuant l'écoute d'ambiance d'un appel de l'unité de communication d'abonné ; et
(ii) la détermination que la modification demandée est acceptable.

15. Unité de communication radio mobile (310) selon la revendication 13 ou la revendication 14, qui est exploitable pour envoyer le message de réponse comme un message sans fil qui comprend un message de données.

16. Unité de communication radio mobile (310) selon l'une quelconque des revendications 13 à 15, exploitable, en réponse au message de demande de modification d'un ou plusieurs paramètres de qualité audio, pour :
régler un niveau de sensibilité de microphone ; et/ou
activer un ou plusieurs algorithmes audio dans l'unité de communication radio mobile (310).
